# EUROPEAN PATENT APPLICATION

(11) **EP 1 744 209 A1**
(43) Date of publication of application: **17.01.2007**
(21) Application number: 06014605.7
(22) Date of filing: 13.07.2006
(51) Int. Cl.: G03B 21/62

(54) **Method for producing transmissive screen, apparatus for producing transmissive screen, and transmissive screen**

(30) Priority: 13.07.2005 JP 2005204235; 29.06.2006 JP 2006179073
(71) Applicant: SONY CORPORATION, Tokyo (JP)
(72) Inventor: Nagahama, Tsutomu Sony Corp., Shinagawa-ku Tokyo (JP); Kiso, Hiroyuki Sony Corp., Shinagawa-ku Tokyo (JP); Haga, Yumi Sony Corp., Shinagawa-ku Tokyo (JP); Miyaki, Yukio Sony Corp., Shinagawa-ku Tokyo (JP)
(74) Representative: Körber, Martin Hans

(57) **Abstract**

There is provided a method for producing a transmissive screen which includes a lens sheet (13) having a lens (12) formed on one side and a light shielding layer (14) formed on the other side, the light shielding layer (14) having openings formed in regions at which light is condensed by the lens (12). The method includes: forming the light shielding layer on the other side of the lens sheet; and forming the openings in the regions at which light is condensed by the lens by radiating laser light from the one side of the lens sheet. In the forming of the openings, a degree of beam collimation of the laser light to the lens sheet is adjusted after an energy density of the laser light is adjusted.

## Description

### BACKGROUND OF THE INVENTION

### 1. Field of the Invention

The present invention relates to a method for producing a transmissive screen or transmissive-type screen which includes a lens sheet having a lens formed on one side and a light shielding layer formed on the other side of the lens sheet, the light shielding layer having openings in light-condensed regions by the lens, an apparatus for producing a transmissive screen, and a transmissive screen.

### 2. Description of Related Art

In the past, there have been known image display devices such that an observer views images formed by modulating transmitted light from a light source using an optical element, such as liquid crystal, images formed by modulating reflected or diffracted light using an optical element, such as reflective liquid crystal or "GxL (G by L)" (registered trademark of Sony Corporation), or images formed by a light emitting element, such as an EL (electroluminescence). These image display devices have an issue in that ambient light from a fluorescent lamp and others present on the observer side reflects off the surface of the image display device to lower the contrast of the image light, lowering the image quality.

As examples of methods for improving the contrast of the image light, there may be mentioned a method in which the intensity of the image light source is increased, and a method in which the reflection of ambient light from the image display device is reduced, but, for achieving display with deep and high-quality colors, the latter, namely, reduction of the reflection of ambient light from the image display device is particularly important.

For example, in rear projection televisions (rear projection image display devices) which have recently attracted attention, a transmissive screen is used wherein the transmissive screen has a high transmittance for the image light from a light source and a low reflectance for the ambient light, namely, has on one side a cylindrical lens or fly's-eye lens and on another side a light shielding layer (black matrix) absorbing the ambient light (see, for example, Japanese Patent Application Publication No. JP10-293362).

Display images have higher definition in recent years, and hence the light shielding layer in the transmissive screen needs to be formed on a cylindrical lens sheet or fly's-eye lens sheet having a fine pitch. As a method for forming a light shielding layer with high positioning accuracy, there has been known a method for producing an optical sheet using a photosensitive adhesive layer shown in Fig. 25 (see, for example, Japanese Patent Application Publication No. JP09-120102).

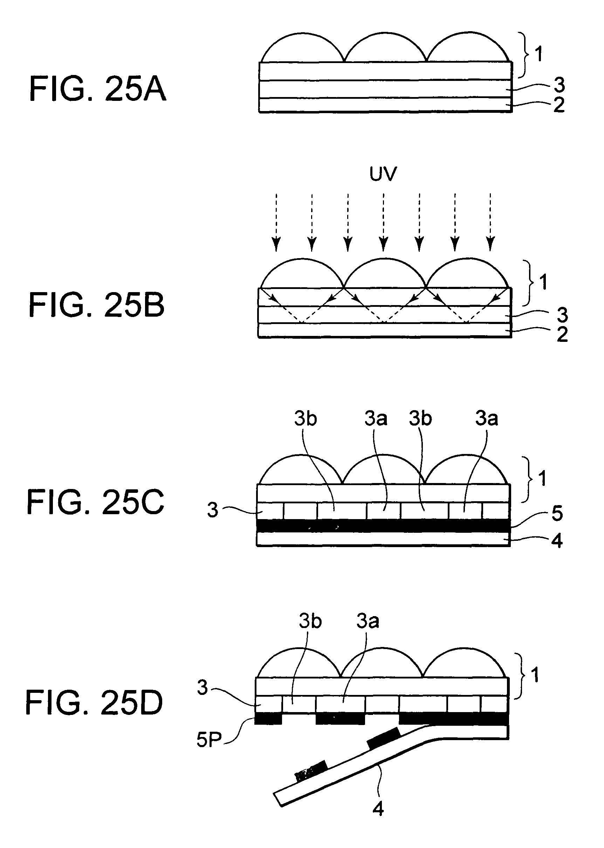

In this method, a photosensitive adhesive layer 3 formed on a supporting substrate 2 is first put on the observed side (flat surface) of a lens sheet 1 (Fig. 25A). In the adhesive layer 3, a positive adhesive which loses adhesion due to irradiation with light is used. Then, the adhesive layer 3 is exposed through the lens side of the lens sheet 1 to light from a light source of ultraviolet light or the like (Fig. 25B), so that light-condensed portions 3a of the adhesive layer 3 are irradiated with the light to lose their adhesion. Subsequently, after peeling off of the supporting substrate 2, a black layer (light shielding layer) 5 supported by a supporting substrate 4 is put on the resultant adhesive layer (Fig. 25C). Then, the supporting substrate 4 is peeled off to allow the black layer 5 to remain on the adhesive layer using the adhesion of uncondensed portions 3b of the adhesive layer 3 (Fig. 25D), thus forming a light shielding pattern 5P having a predetermined form on the observed side of the lens sheet 1.

The above method for producing an optical sheet, however, has the following issue. When the exposure energy is insufficient, the adhesive does not completely lose the adhesion, so that the unnecessary portion of the black layer 5 remains. Conversely, when the exposure energy is too high, the periphery of the light-condensed portions is also cured to lose the adhesion, so that the black layer 5 does not remain on the portion from which light should be shielded. Therefore, for forming fine opening portions in the light shielding layer with accuracy, it is necessary to precisely optimize the exposure energy, but this needs expensive exposure equipment.

In addition, the size of the openings in the light shielding pattern is affected by unevenness of the adhesion of the photosensitive adhesive layer or the film strength of the light shielding layer, and hence it is very difficult to constantly form a uniform (regular) light shielding pattern in a large area. Further, the photosensitive adhesive is relatively expensive and has unstable properties of material and poor handling properties, thus making it difficult to improve the productivity and reduce the production cost.

On the other hand, Japanese Patent Application Publication No. JP2004-191429 discloses a technique in which the lens side of a lens sheet is irradiated with laser light in the direction perpendicular to the lens sheet and opening portions are formed in the light shielding layer utilizing a condensing action of the lens. This method can selectively form opening portions in the light shielding layer without using a photosensitive adhesive layer.

### SUMMARY OF THE INVENTION

However, the method of the related art in which opening portions are formed in the light shielding layer using laser light has an issue such that the degree of collimation of the laser light is so high that a spot, at which light is being condensed (below the spot will be referred to as the light-condensed spot), formed by the lens is too small. For this reason, when the lens sheet produced by this method is used in a transmissive screen, the too small size of the opening portions disadvantageously lowers the transmittance of the screen.

For example, in rear projection televisions, image light which enters at a beam degree of collimation of ±2.5° or more with respect to the lenticular lens surface is included. The reason for this is that the transmissive screen is formed with a Fresnel lens and a lenticular lens wherein the Fresnel lens also has a diffusion layer for suppressing moiré or scintillation. Therefore, the image light broader than the light-condensed spot of the laser enters the light shielding portion and hence cannot pass through the light shielding layer, thus lowering the transmittance of the screen.

Accordingly, it is desirable to provide a method for producing a transmissive screen capable of improving transmittance by optimizing a size of opening portion when the opening portions are formed in a light shielding layer using a laser condensing action of a lens, an apparatus for producing such a transmissive screen, and such a transmissive screen. The present invention is made in view of the above issues.

According to an embodiment of the present invention, there is provided a method for producing a transmissive screen which includes a lens sheet having a lens formed on one side and a light shielding layer formed on the other side, the light shielding layer having openings formed in regions at which light is condensed by the lens. The method includes: forming the light shielding layer on the other side of the lens sheet; and forming the openings in the regions at which light is condensed by the lens by radiating laser light from the one side of the lens sheet. In the forming of the openings, an energy density of the laser light is adjusted and then a degree of beam collimation of the laser light to the lens sheet is adjusted.

According to another embodiment of the present invention, there is provided an apparatus for producing a transmissive screen. The apparatus includes: a laser source; a mechanism adapted to adjust an energy density of laser light emitted from the laser source; and a degree-of-collimation adjusting element adapted to adjust a degree of beam collimation of the laser light to be radiated to the lens sheet.

In the embodiments of the present invention, the light shielding layer is selectively ablated with laser light utilizing the condensing action of a lens to form the opening in the light shielding layer. By using such a self-aligning and physical method, an optical sheet having fine pitch and high light shielding rate may be constantly produced.

Further, in the embodiments of the present invention, the energy density of the laser light is adjusted, and then the degree of beam collimation of the laser light to the lens sheet is adjusted. Accordingly, an incident angle of the laser light to the optical axis of the lens may be in an appropriate range of the angle. By virtue of this, the size of the opening formed in the light shielding layer may be appropriately adjusted, making it possible to improve the transmittance of the screen.

Methods for adjusting the energy density of laser light may include, in addition to the method of adjusting the beam profile of laser light, a method of controlling output of the laser light by adjusting the energy of excitation source, a method of controlling the transmission rate by using an attenuator disposed in an optical path, etc. Specifically, the adjustment of the beam profile includes adjustments such as expanding or reducing beam width or beam diameter of the laser light.

The degree-of-collimation adjusting element for adjusting the degree of beam collimation of the laser light may be formed with a diffuser panel, a diffraction optical device, a convex lens having different focal lengths, or the like. It is preferred that the degree of beam collimation of the laser light is adjusted by the degree-of-collimation adjusting element to a value within a range from ±2.5 to ±10°, both inclusive. If the degree of beam collimation is less than ±2.5°, the size of the opening portions formed is insufficient, making it difficult to improve the transmittance for image light entering the screen. On the other hand, when the degree of beam collimation is more than ±10°, the area occupied by the light shielding layer is reduced to lower the contrast of a projected image.

As an example of the method for irradiating the lens sheet with laser light, there is a method in which a laser having a degree of collimation adjusted is scanned over the lens sheet. An alternative method is such that the lens sheet is irradiated with laser light emitted from a laser source wherein a beam width or a beam diameter of the laser or both is expanded by a beam expander. The lens sheet may be irradiated with laser light while moving the lens sheet in a predetermined direction at a certain speed, thus enabling continuous production of the lens sheet.

In the embodiments of the present invention, there is used a laser having a wavelength region such that the laser is not absorbed by the lens material but is absorbed by the light shielding layer. Preferably is used a laser having a wavelength region such that the lens has a transmittance for the laser of 95% or more, excluding the surface reflection, and the light shielding layer has a transmittance for the laser of 50% or less. Such a laser enables to fabricate the light shielding layer without damaging the lens.

Examples of the laser include a XeF excimer laser, an Nd-YAG laser, a YVO₄ laser, a copper vapor laser, a ruby laser, a titanium sapphire laser, and a semiconductor laser. If the lens is to be formed with an ultraviolet curing resin, preferred is a near infrared laser, such as a fundamental wave of Nd-YAG laser or a fundamental wave of YVO₄ laser, or a visible laser, such as a second harmonic wave of Nd-YAG laser, a second harmonic wave of YVO₄ laser, or a copper vapor laser.

According to the present invention, not only can ensure formation of uniform fine opening portions be formed in the light shielding layer with high accuracy, but also the transmittance of the screen may be improved.

### BRIEF DESCRIPTION OF THE DRAWINGS

Figs. 1A to 1C are views for explaining the process for producing a lens sheet forming a transmissive screen according to an embodiment of the present invention;
Figs. 2A and 2B are diagrammatic views for explaining a laser processing method in processing the lens forming surface of a master;
Figs. 3A and 3B are diagrammatic views for explaining a laser processing method in processing the lens forming surface of a master;
Figs. 4A to 4C are diagrammatic views for explaining a laser processing method for a master;
Fig. 5 is a diagram showing one example of a mask used in the laser processing method shown in Figs. 4;
Fig. 6 is a graph for explaining the transmittance property of each of a material for lens sheet and a material for light shielding layer;
Fig. 7 is a graph for explaining the wavelength region of usable laser light in processing a light shielding layer;
Fig. 8 is a graph showing the relationship between laser energy of laser light and processing depth;
Fig. 9 is a diagram for explaining a pulse interval of laser light;
Fig. 10 is a diagrammatic view showing the construction of a laser optical system forming an apparatus for producing a lens sheet;
Fig. 11 is a table showing an intensity angular distribution of light source for each of parallel light, diffused light (Gaussian distribution) and angle-controlled light, an intensity distribution at an opening formed portion when each of these lights is used to form the opening at a light-shielding layer, and a size of the opening;
Figs. 12A and 12B are photomicrographs showing inside of a lens sheet when radiating diffused light with excessive energy forms openings;
Figs. 13A and 13B are views of construction examples in the cross section of an angle adjusting element (degree-of-collimation adjusting element);
Fig. 14 is a schematic view of a lens sheet for explaining formation process of openings by an angle-controlled light;
Figs. 15A and 15B are views for explaining the relationship between an example of arrangement of diffuser panels forming a degree-of-collimation adjusting element and a flow direction of a lens sheet;
Figs. 16A and 16B are views for explaining the relationship between an example of arrangement of diffuser panels forming a degree-of-collimation adjusting element and a flow direction of the lens sheet;
Fig. 17 is a diagrammatic view showing the construction of a rear projection image display device;
Fig. 18 is a diagrammatic perspective view showing a screen unit in the projection image display device;
Fig. 19 is a view for explaining one function of a lenticular lens sheet;
Fig. 20 is a perspective view showing one example of a fly's-eye lens sheet;
Figs. 21A and 22B are photomicrographs of light shielding patterns of the lens sheets in Comparative Examples 1 and 2;
Figs. 22A and 22B are photomicrographs of light shielding patterns of the lens sheets in Examples 2 and 3;
Figs. 23A and 23B are photomicrographs of a light shielding pattern of the lens sheet in Example 3 and Example 4;
Fig. 24 is a photomicrograph of a light shielding pattern of the lens sheet in Comparative Example 3; and
Figs. 25A to 25D are views for explaining a related art's process for producing an optical sheet.

### DETAILED DESCRIPTION OF THE INVENTION

Herein below, embodiments of the present invention will be described with reference to the accompanying drawings. The present invention is not limited to the following embodiments and may be changed or modified based on the technical concept of the present invention.

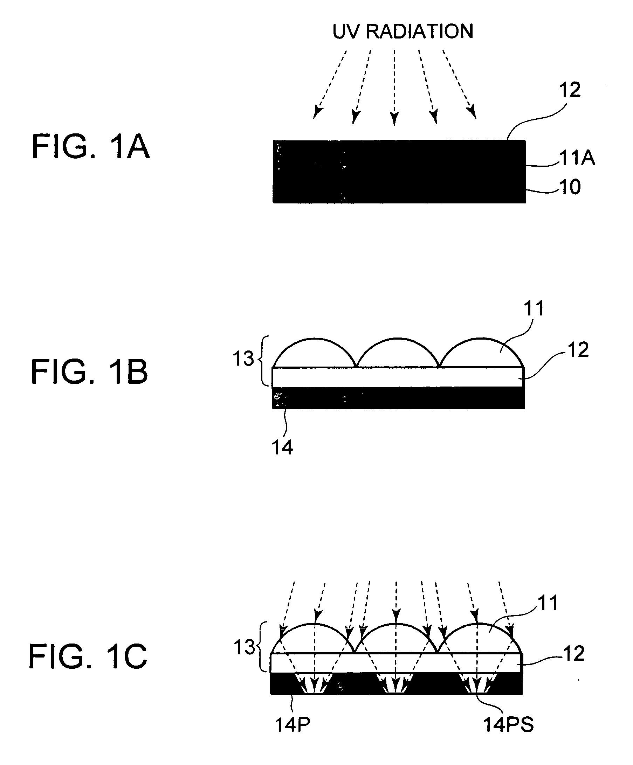

Figs. 1A to 1C are cross-sectional views for explaining a process for producing an optical sheet according to an embodiment of the present invention.

First, as shown in Fig. 1A, a material 11A capable of absorbing energy for curing (an ultraviolet curing resin in the present embodiment) is placed in a lens mold 10 having a predetermined lens form, and a transparent sheet 12 is put on the lens mold so that the sheet is in contact with the material, and then the transparent sheet 12 is irradiated with ultraviolet radiation to cure the material 11A, thus preparing a lens sheet 13 having a lens array 11 formed on the surface of the transparent sheet 12 (Fig. 1B). The lens array 11 forms a lenticular lens, such as a cylindrical lens or a fly's-eye lens.

The form of a lens having a light condensing function, such as a cylindrical lens or a fly's-eye lens, may be prepared by cutting, patterning a resist by means of an electron beam or an excimer exposure system, or laser processing. In electron beam lithography, intermediate exposure is performed by controlling the exposure energy to achieve continuous gradation blazing (H. Nishihara and T. Suhara, "Micro Fresnel lens", Progress in Optics, vol. 24, E. Wolf ed., pp. 1-37). In patterning a resist by means of an excimer exposure system, multilevel exposure using a plurality of photomasks has an issue of the increase of process chips or the accuracy of alignment, but the use of a mask having a shade changed, i.e., a gray scale mask (e.g., HEBS: high energy beam sensitive glass mask, manufactured and sold by Canyon Materials, Inc.)(c. Wu., "Method of making high energy beam sensitive glass", U.S. Patent No. 5,078,771, Jan. 1992) makes it possible to prepare a lens form with 500 or more gradation. In preparing a lens form by laser processing, the processing for condenser requires an extremely prolonged time in formation of lens array, but, for example, a mask imaging method using an excimer laser can form a lens having a fine pattern with a large area in a short time.

As mentioned above, a master for use in forming a fly's-eye lens sheet may be prepared by processing a substrate, which is a work piece, by a mask imaging method using, e.g., a KrF excimer laser. As a material for the substrate, a plastic material may be used. The work piece is not limited to a substrate made of a plastic material or the like, and a sheet or film may be used as the work piece. The material for the work piece is not limited to a plastic, and a metal, glass, or the like may be used.

As a material for the plastic substrate that serves as the work piece to be processed, a known plastic may be used. In this case, the processing characteristics of a plastic or the surface form of the plastic after the processing varies depending on the heat resistance or glass transition temperature of the plastic, and therefore it is preferred that a plastic is appropriately selected according to the processing conditions, and it is most preferred that polycarbonate is used. Alternatively, the master may be prepared by a pressing method, a method using a stamper for molding, or a cutting method. In such a case, as a material for the work piece to be processed, not only a plastic but also a metal may be used.

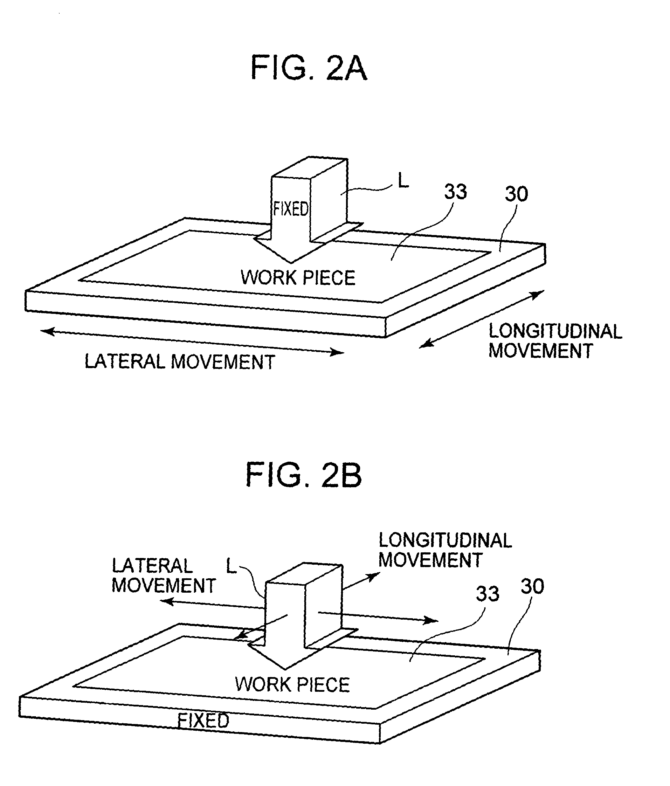

Examples of methods for moving the mask pattern formed in the work piece include a method in which laser light is fixed and a stage having thereon the work piece is moved, and a method in which laser light to the fixed work piece is moved. Fig. 2A shows an example in which the position of laser light L is fixed and a stage 30 having supported thereon a work piece 33 is moved in the longitudinal and lateral directions to move the mask pattern formed in the work piece 33. Fig. 2B shows an example in which the stage 30 is fixed and the laser light L to the fixed work piece 33 supported by the stage 30 is moved in the longitudinal and lateral directions to move the mask pattern formed in the work piece 33.

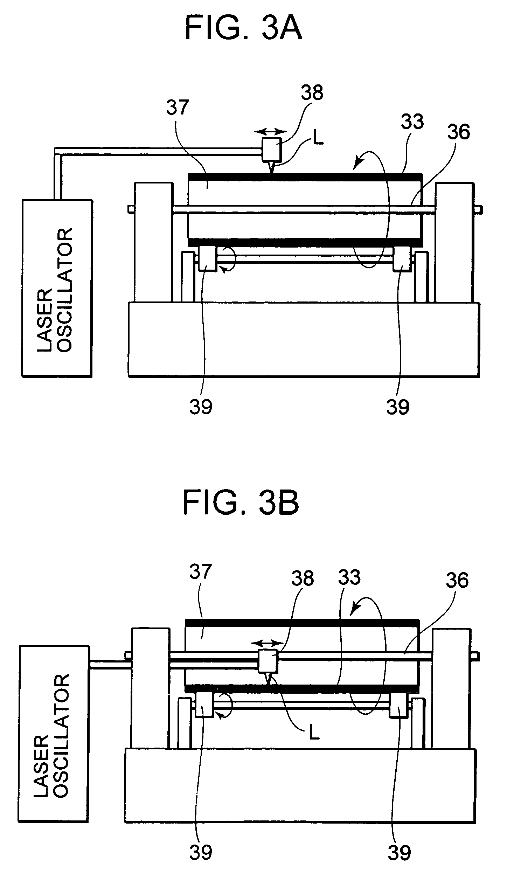

Not only the plane stage shown in Fig. 2A or 2B but also a rotating stage which rotates in one direction as diagrammatically shown in Fig. 3A or 3B may be used. The rotating stage mechanisms in the figures show examples in which a work piece 33 is put on the outer surface or inner surface of a drum 37 which rotates round a rotating shaft 36 due to the driving force caused by driving rollers 39, and a laser head 38 facing the work piece 33 is moved in the direction of the shaft of the drum 37 to move the mask pattern formed in the work piece 33.

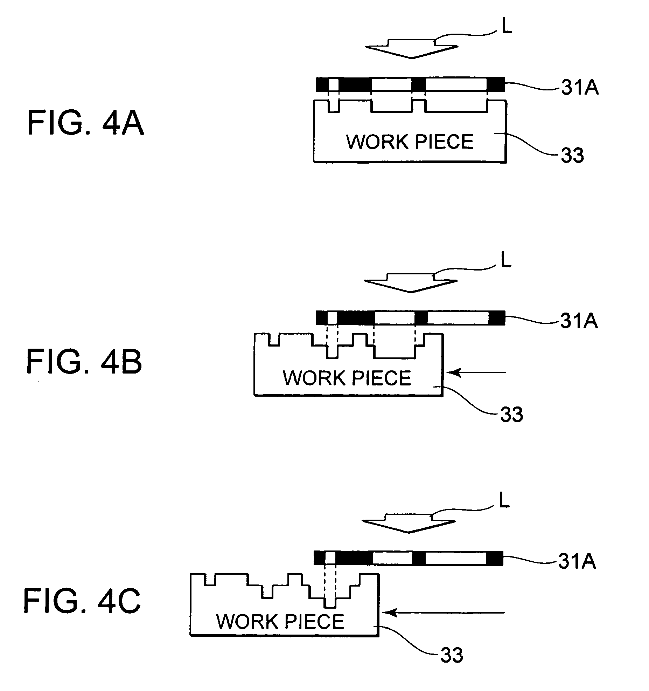

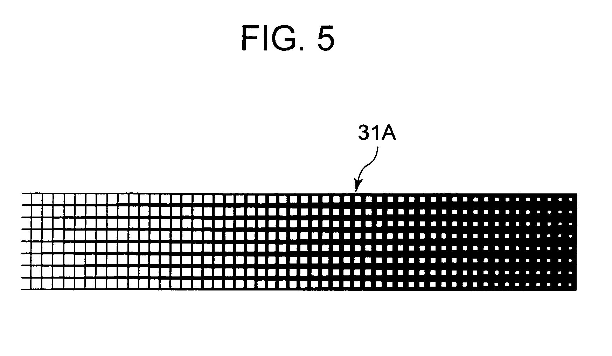

For example, Figs. 4A to 4C are views for explaining the principle of the method for preparing a master for fly's-eye lens, and Fig. 5 is a diagram showing one example of the construction of a mask used in the above method.

As shown in Fig. 5, a plurality of opening portions is formed in a mask 31A. The form of the opening portions is selected so that a spherical or non-spherical lens may be formed by, as shown in Figs. 4, irradiating the work piece 33 through the opening portions with laser light L to form a mask pattern in the work piece 33 and moving the mask pattern in one direction on the work piece 33. Specifically, the form of the opening portions in the mask 31A shown in Fig. 5 is such that the thicknesswise direction of a desired lens form is divided into a plurality of cross-sections and they are arranged in the direction of the movement of the mask pattern.

The method for preparing a master using the mask 31A is described with reference to Figs. 4A to 4C. First, the mask 31A is arranged above the work piece 33, and the work piece 33 is irradiated through the mask 31A with laser light L to form a mask pattern in the work piece 33 (Fig. 4A), so that the work piece 33 is processed at portions corresponding to the forms of the respective opening portions. Then, the work piece 33 is moved in the lateral direction indicated by an arrow in a distance of one pattern of the mask 31, namely, a distance between the center of one opening portion and the center of the adjacent opening portion in the mask 31A, and irradiated with the laser light L (Fig. 4B), thus achieving the second-stage processing in the thicknesswise direction of the work piece 33. Similarly, the work piece is moved in the lateral direction in a distance of one pattern of the mask 31A and processed to achieve the third-stage processing in the thicknesswise direction as shown in Fig. 4C. In this way, by performing laser irradiation every time after the movement in the lateral direction in a distance of one pattern, the work piece 33 may be processed in the thicknesswise direction for the number of times corresponding to the number of the patterns in the mask 31A presented in the moving direction. If the number of the patterns formed in the mask 31A is, for example, 100 or more, a lens form having a smooth curved line in the thicknesswise direction may be prepared in the work piece 33.

Further, the thus prepared master having the lens form is subjected to Al vapor deposition or Ni electroless plating to form a conductive layer, and then subjected to Ni-electroforming using the conductive layer as a seed to prepare a mold having a resistance to the repeated uses.

A lens sheet having a desired lens form can also be produced by a method in which a resin is directly heat-pressed using the above-prepared mold or a melt extrusion method in which a resin melt by heat is cured while cooling the resin in the lens mold. For improving the ease of releasing the molding material from the mold, it is desired that the mold surface is preliminarily subjected to release treatment, e.g., nickel vapor deposition or fluorine material or silicone material coating, or an Ni-electroformed mold containing fluorine is prepared.

With respect to the resin material 11 A forming the lens, there is no particular limitation as long as it transmits the laser light used in forming opening portions in the light shielding layer mentioned below, but, from the viewpoint of facilitating the production of the lens, preferred is a resin capable of being cured by ultraviolet radiation, electron radiation, or heat, and most preferred is an ultraviolet curing resin. As an ultraviolet curing resin, for example, an acrylate resin, such as urethane acrylate, epoxy acrylate, polyester acrylate, polyol acrylate, polyether acrylate, or melamine acrylate, may be used. In the ultraviolet curing resin, if necessary, a light stabilizer, an ultraviolet light absorber, an antistatic agent, a flame retardant, or an antioxidant may be added in an appropriate amount.

The lens array 11 in the lens sheet 13 may be obtained by molding a transparent thermoplastic resin, such as a polyacryl, polyvinyl chloride, polycarbonate, or cyclic olefin resin, by an arbitrary method. In this case, a substrate corresponding to the transparent sheet 12 need not be separately prepared, and may be integrated with the lens array.

On the other hand, as the transparent sheet 12, a known polymer film may be used. Specifically, there may be used a polymer film appropriately selected from resin films conventionally used, e.g., polyester, polyethylene terephthalate (PET), polyimide (PI), polyamide, aramid, polyethylene, polyacrylate, polyether sulfone, triacetyl cellulose, polysulfone, diacetyl cellulose, polypropylene, polyvinyl chloride, acrylic resins, polycarbonate, epoxy resins, urea resins, urethane resins, and melamine resins.

Subsequently, as shown in Fig. 1B, a light shielding layer 14 is formed on the back surface (the surface on which the lens is not formed) of the prepared lens sheet 13. Examples of methods for forming the light shielding layer 14 include a method in which the light shielding layer is directly applied to the lens sheet 13, a method in which the light shielding layer is formed by transfer using a process of, e.g., thermal transfer, a method in which an adhesive containing a light shielding material is put on the lens sheet, and a method in which the light shielding layer is formed by transfer through an adhesive, but any method may be employed as long as the uniform light shielding layer may be formed on the back surface of the lens sheet 13. The light shielding layer may be formed from a metal or metal oxide, such as CrOₓ/Cr, using a process of, e.g., sputtering, and there is no particular limitation as long as the ambient light reflection may be suppressed.

As a material forming the light shielding layer 14, a composition obtained by mixing a resin and carbon black may be used. As the carbon black, commercially available carbon black may be used. Examples of commercially available carbon black include #980B, #850B, MCF88B, and #44B, manufactured and sold by Mitsubishi Chemical Industries Ltd.; BP-800, BP-L, REGAL-660, and REGAL-330, manufactured and sold by Cabot Specialty Chemicals Inc.; RAVEN-1255, RAVEN-1250, RAVEN-1020, RAVEN-780, and RAVEN-760, manufactured and sold by Columbia Carbon Corporation; and Printex-55, Printex-75, Printex-25, Printex-45, and SB-550, manufactured and sold by Degussa AG These may be used individually or in combination.

As a binder resin mixed with the carbon black, a modified or unmodified vinyl chloride resin, polyurethane resin, phenoxy resin, or polyester resin may be used, and cellulose ester, such as cellulose acetate butyrate, may be used. Alternatively, a thermoplastic resin, thermosetting resin, reactive resin, or electron radiation curing resin having a specific way of use may be used.

The carbon black content of the composition is preferably 20 to 75 wt%, both inclusive. When the carbon black content is less than 20 wt%, the light transmittance is too high, and hence the thickness of the light shielding layer is inevitably increased to achieve a desired light shielding ability. In this case, the energy required in the ablation for the light shielding layer in the subsequent step of forming opening portions is high, lowering the throughput speed. On the other hand, when the carbon black content is more than 75 wt%, the amount of the carbon black is too large relative to the amount of the binder resin, causing the carbon black to be removed or deposited on the opening portions or causing pollution of the apparatuses used in the process. A lack of the black layer on the uncondensed portion or the black layer remaining on the condensed portion disadvantageously lowers the contrast of the screen and the transmittance for projected image.

In the light shielding layer 14, in addition to the carbon black and binder resin, if necessary, an additive, such as an organic pigment, an inorganic pigment, or a visible light absorber, may be added. The composition forming the light shielding layer may be prepared by mixing the above ingredients and, if necessary, a solvent by a general method using an agitator, and applied to the back surface of the lens sheet or a substrate for transfer, and dried or cured.

Next, as shown in Fig. 1C, the surface of the lens sheet 13 on which the lens is formed is irradiated with laser light L having a predetermined wavelength and energy. The laser light L is condensed by each lens unit of the lens array 11, thus forming a light shielding pattern 14P having openings formed by an ablation action in positions of the light shielding layer 14 corresponding to the light-condensed portions by the lens.

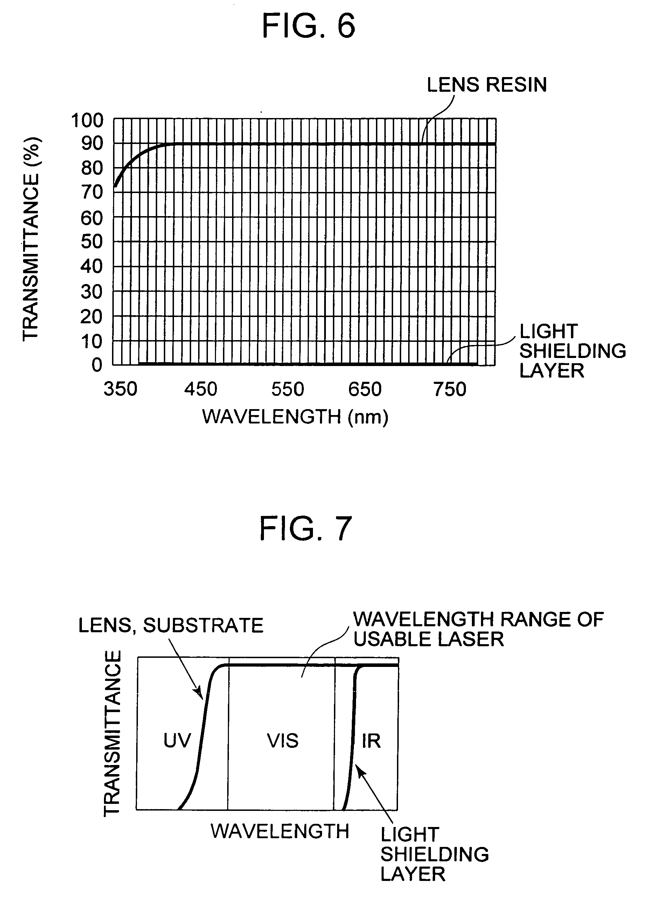

As the laser light L, as shown in Figs. 6 and 7, there is selected a laser having a wavelength region such that the lens array 11 or transparent sheet 12 does not absorb the laser, namely, has a transmittance for the laser of 90% or more, excluding the surface reflection, and the light shielding layer 14 absorbs the laser, namely, has a transmittance for the laser of 50% or less. By using this laser, only the light shielding layer 14 may be processed without damaging the lens sheet 13.

In the present embodiment, the lens sheet 13 (lens array 11, transparent sheet 12) absorbs ultraviolet light and the light shielding layer 14 absorbs visible light, and therefore a near ultraviolet, visible, or near infrared laser may be used. Examples of lasers include an XeF excimer laser (351 nm), an Nd-YAG laser (fundamental wave: 1,064 nm; second harmonic wave: 532 nm; third harmonic wave: 355 nm), a YVO₄ laser (fundamental wave: 1,064 nm; second harmonic wave: 532 nm), a copper vapor laser (511 nm, 578 nm), a ruby laser (694 nm), a titanium sapphire laser (840 to 920 nm), and a semiconductor laser (805 nm). When the lens sheet is formed with a material having no ability to absorb ultraviolet light, a short wave laser, such as an XeCl excimer laser (308 nm), may be used.

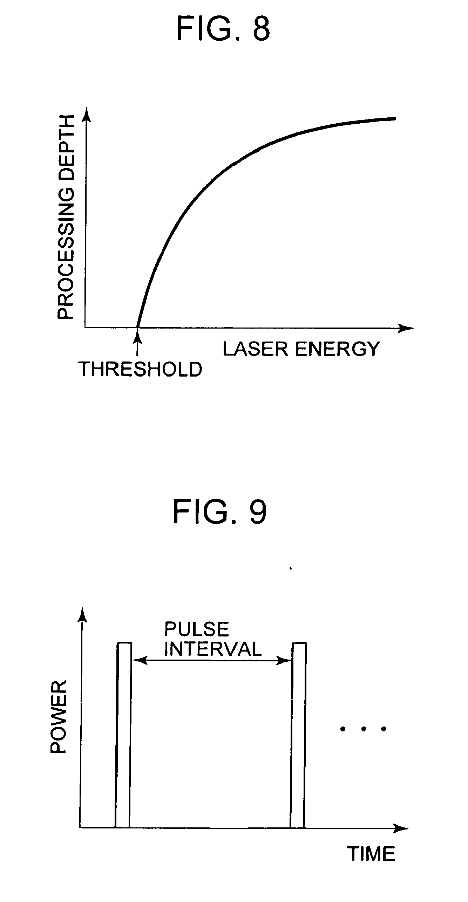

For achieving ablation for the light shielding layer 14, as shown in Fig. 8, it is necessary to use a laser having energy of a certain threshold or more. In the present embodiment, the laser light L is condensed by the lens 11, and therefore it is desired to adjust the light source intensity so that the laser has energy of a threshold of the ablation for the lens resin or substrate (transparent sheet 12) or less and the laser condensed by the lens 11 has energy of a threshold of the ablation for the light shielding layer 14 or more.

In the present embodiment, as the laser light L, a pulsed laser is used. The number of pulses of the laser required to form opening portions 14PS in the light shielding layer 14 (Fig. 1C) depends on the thickness of the light shielding layer 14. It is preferred to form the light shielding layer 14 having such a thickness (e.g., 10 µm or less) that the opening portions 14PS may be formed using laser light with several pulses. When the light shielding layer 14 has a thickness that needs laser light with several pulses or more to form the opening portions, as shown in Fig. 9, the use of a laser having a pulse interval of 500 ns (nanoseconds) or more prevents the opening size from enlarging due to heat energy stored in the light shielding layer 14, or prevents the light shielding layer 14 from suffering deformation due to heat.

Further, there is an issue in that the degree of beam collimation of the laser light L is so high that the light-condensed spot formed by the lens array 11 is too small when the lens formed side of the lens sheet 13 is irradiated with the laser light L in the direction perpendicular to the lens sheet. For example, when the lens sheet 13 is used in a transmissive screen for rear projection television, image light which enters at a degree of beam collimation of ±2.5° or more with respect to the lens side is included. For this reason, when opening portions are formed in the light shielding layer by the laser light L in the direction perpendicular to the light shielding layer, part of the image light cannot pass through the resultant opening portions, so that the transmittance of the screen is lowered.

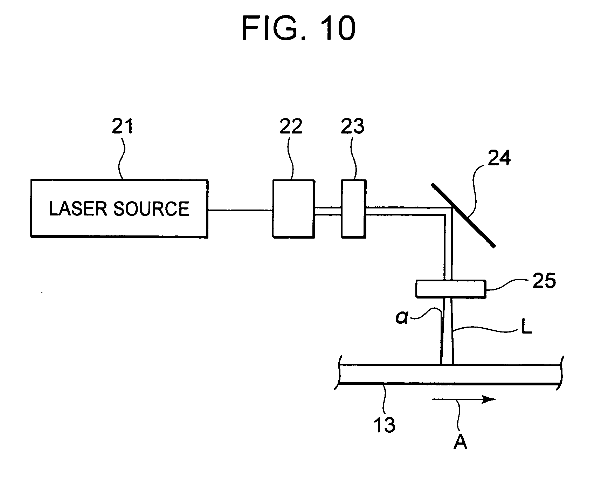

In the present embodiment, as shown in Fig. 10, a laser optical system 20 for irradiating the lens sheet 13 with the laser light L is formed with a laser source 21, a beam expander 22 for expanding a beam width or beam diameter of a laser emitted from the laser source 21 or both, a homogenizer 23 for homogenizing an intensity distribution of the laser having an expanded beam width, a reflector mirror 24, and a degree-of-collimation adjusting element 25 for adjusting a degree of beam collimation of the laser light L to the lens sheet 13.

The beam expander 22 expands a laser light emitted from the laser source 21 in the beam width direction while reducing the laser light in the direction orthogonal to the beam width direction (short-side direction). The beam expander 22 determines a radiation area per shot of the laser light L to the lens sheet 13, for example, expands the laser so that the laser light L has a beam width corresponding to the sheet width of the lens sheet 13. This expansion can enhance the radiation efficiency of the laser light L to the lens sheet 13. In the present invention, instead of the beam expander, any other device may be used as long as the device can shape the beam profile such as beam width, beam size, etc. The laser may be scanned over the lens sheet without using the beam expander.

By increasing the radiation area using the beam expander 22, the energy density of the laser light may be lowered, and, by reducing the radiation area, the energy density may be increased. Alternatively, the energy density of the laser may be adjusted by changing the current amount fed to an LD when using an LD excited laser.

The homogenizer 23 homogenizes an intensity distribution (energy density) of the laser from the beam expander 22 to prevent uneven radiation in the laser irradiated area on the lens sheet 13. As the homogenizer 23, a beam homogenizer of a known system, for example, a kaleidoscope system, a fly's-eye lens system, aspheric lens system, wave-guide system, or a holographic optical device system may be used.

The reflector mirror 24 reflects the laser light L having an intensity distribution homogenized by the homogenizer 23 toward the degree-of-collimation adjusting element 25. The reflector mirror 24 may be formed with a galvano mirror or the like to scan the laser in a predetermined range of the angle.

The degree-of-collimation adjusting element 25 adjusts a degree of beam collimation of the laser light L. The degree of beam collimation of the laser light L is an angle indicated by a symbol α in Fig. 10, and the angle distribution of a light source intensity may be adjusted, for example, it may be homogeneous distribution, Gauss distribution, bell-form distribution, or arbitrary designed distribution, but the angle is defined in a range of angle (FWHM) in which the light source intensity is half. In the present embodiment, the degree of beam collimation of the laser light L is ±2.5 to ±10°. When the degree of beam collimation is less than ±2.5°, the transmittance for image light entering the screen cannot be improved. On the other hand, when the degree of beam collimation is more than ±10°, the area occupied by the light shielding layer is reduced to lower the contrast of a projected image.

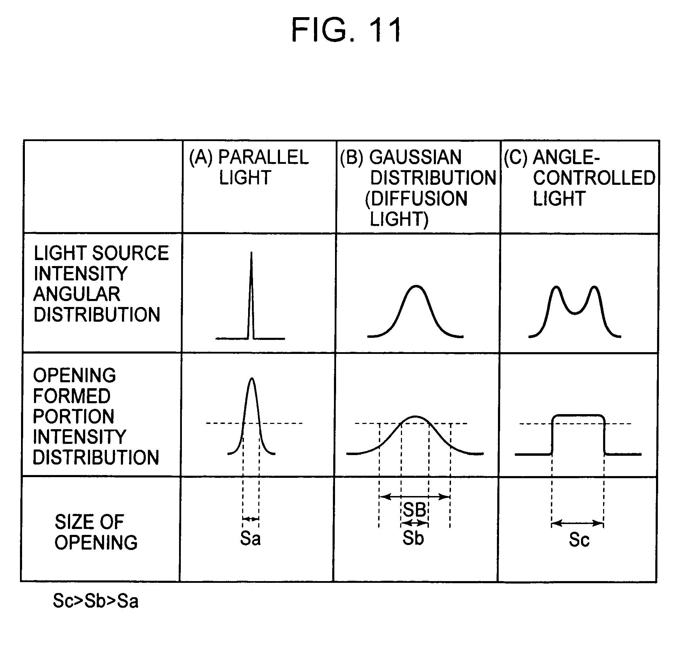

As the degree-of-collimation adjusting element 25, there may be used any optical systems which can lower the degree-of-collimation of the laser light L, for example, a diffuser panel, a diffraction optical device, or a convex lens having different focal lengths. It is preferable to use an angle-controlled light radiation system in which stronger intensity is obtained in a specific angle range, compared to a diffused light radiation system having Gaussian distribution, etc. Below, further details are described with reference to Fig. 11.

Fig. 11 shows intensity angular distributions of light source for parallel light, diffused light (Gaussian distribution) and angle-controlled light, intensity distributions at opening formed portions when these lights are used to form the openings at a light-shielding layer, and sizes of the opening. In the case of direct radiation with laser light without the degree-of-collimation adjusting element, i.e. the radiation of parallel light, only narrow openings of "Sa" may be formed due to a high degree of collimation in the light source.

On the other hand, in the case of radiation with diffused light whose angle components are set to that of a Gaussian distribution type by using a diffuser, only the opening size of "Sb" is obtained. The opening size of "Sb" is larger than "Sa" but less than the original target opening size of "SB". One of reasons for failing to obtain the target opening size is such that slant angle radiation components cannot produce processing energy larger than a threshold value at the opening portions. Of course, it is possible to obtain the energy larger than the threshold value even for the slant angle radiation components by increasing output of a laser, which serves as the light source. However, there is an issue that, in the center area, more energy than necessary is radiated so as to reduce efficiency of energy utilization, thereby preventing from improving yield. Furthermore, there is another issue that, when the diffuser with higher diffusion power is used and the laser light includes a component having energy less than the threshold value, such energy is not used for the processing but dissipate as thermal energy, and heat effect of the thermal energy causes deformation of the sheet.

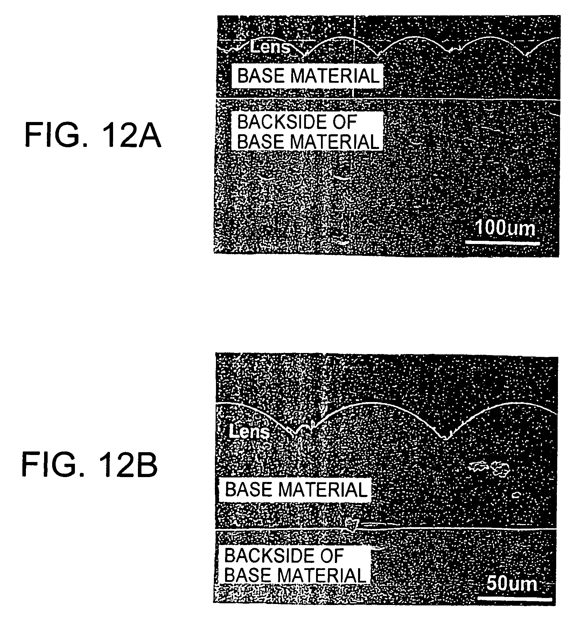

In the present optical system, if the laser output is increased more than necessary in order to enlarge the size of opening, there is also an issue such that form formation may occur inside the lens sheet. This form formation is occurred when energy density at a point of the highest light condensation becomes too high and goes beyond a damage threshold of the upper layer of the lens sheet. Figs. 12A and 12B are photomicrographs showing internal forms occurred when radiating with excessive energy after forming a micro lens array on a substrate. To make observation of form damaged portions easier, the present photomicrographs are taken from the backside of the lens sheet with a slant angle after removing the backside light-shielding layer. It can be observed that portions corresponding to pitch of lens array in the longer-side direction.

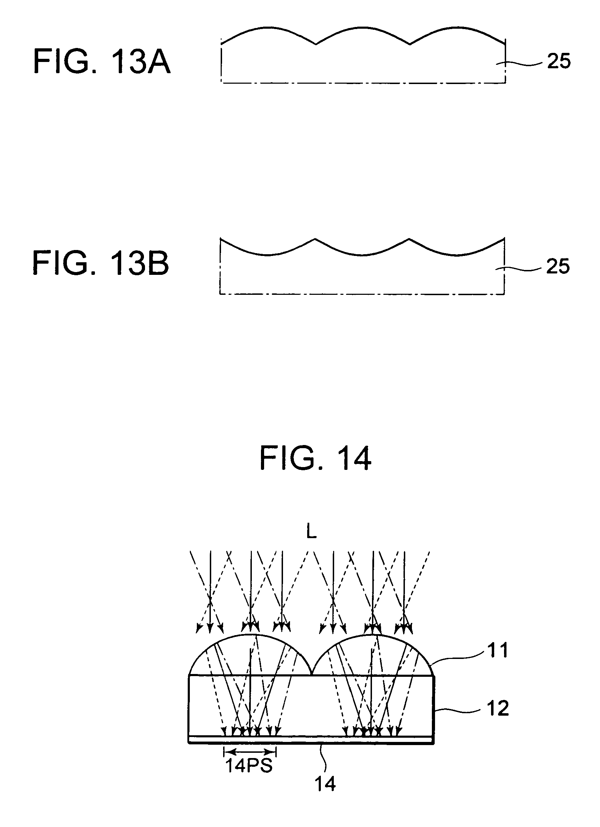

On the other hand, if the angle-controlled light, whose degree of collimation is controlled by the angle adjusting element, is used for radiation, the intensity distribution at the portions where the openings are formed becomes uniform. Accordingly, not only that no damage is produced in the upper layer portion of the lens sheet but also that the larger opening size of "Sc" may be obtained with high energy efficiency. Examples of the cross-sectional structure of the angle adjusting element are shown in Figs. 13A and 13B. Such angle adjusting element may be manufactured by using the mask-imaging method with an excimer laser, which is used for forming the lens shape. It is possible to use a fabricated polycarbonate master directly. However, in such a case, it is preferable to scan the laser light over the polycarbonate master, or perform irradiation while moving the polycarbonate maser with respect to the optical axis. If the relative relationship between the laser optical axis and the polycarbonate master is fixed during the processing, the polycarbonate master may melt due to heat energy build-up.

In the above construction of the laser optical system, the laser light L generated and emitted from the laser source 21 is expanded by the beam expander 22 to a predetermined beam width or beam diameter, and then the energy density of the laser is adjusted, that is, the intensity distribution is homogenized by the homogenizer 23. Then, the laser light L reflects off the reflector mirror 24 and enters the degree-of-collimation adjusting element 25 where the degree of collimation of the laser light L is adjusted, followed by irradiation of the lens sheet 13 with the laser light. It is preferable to optimize the laser beam direction and the laser shot interval since there may be moiré depending on the relationship between the lens pitch and the laser shot interval.

In the present embodiment, the lens formed side of the lens sheet 13 may be irradiated with the laser light L under predetermined degree of beam collimation conditions, making it possible to enlarge the size of the opening portions 14PS formed in the light shielding layer 14 as shown in Fig. 14. By virtue of this, when the lens sheet 13 is used in a transmissive screen for projection image display device, the transmittance of the screen may be improved.

The lens sheet 13 can also be irradiated with the laser light L while moving the lens sheet 13 in the direction indicated by an arrow A in Fig. 10 at a certain speed. In this case, the opening portions 14PS may be continuously formed in the light-shielding layer 14 while conveying the lens sheet 13, for example, in a roll-to-roll way, thus improving the productivity of the screen.

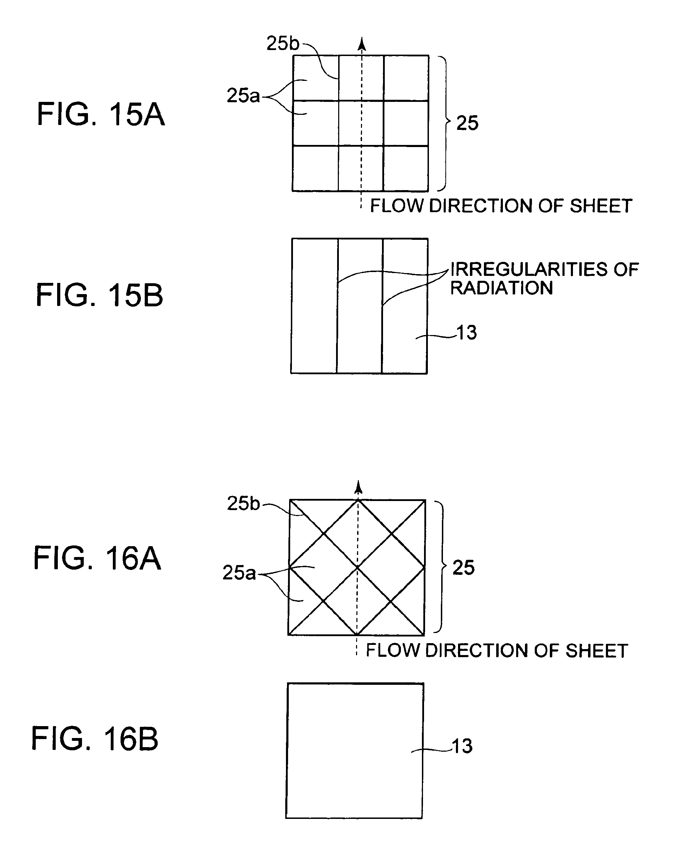

In this case, when the degree-of-collimation adjusting element 25 is formed with a large-area diffuser panel including a plurality of diffuser panels joined to one another and, for example, as diagrammatically shown in Figs. 15A and 15B, joints 25b of diffuser panels 25a are parallel to the flow direction of the lens sheet 13, irregular irradiation in a line form along the joints 25b possibly occurs on the lens sheet 13. The cause of this resides in that the radiation energy just under the joints 25b of the diffuser panels 25a is different from the radiation energy under the surface of the diffuser panels 25a. For solving this, as diagrammatically shown in Figs. 16A and 16B, the diffuser panels 25a are arranged so that the joints 25b are not parallel to the flow direction of the lens sheet 13 to avoid the occurrence of irregular irradiation in a line form along the joints 25b. This example may be applied not only to the laser exposure but also to general UV exposure.

Thus, a light shielding pattern 14P having the opening portions 14PS formed in positions corresponding to the light-condensed portions by the lens is formed on the back surface of the lens sheet 13 as shown in Fig. 1C. The configuration of the opening portions 14PS depends on design of lens surface in forming the lens array 11. The configuration of the opening portions may be formed in strip-shape when using a cylindrical lens form, or is polygon-shape such as hexagonal or rectangular, circular-shape, dot-shape such as X-shape, according to the closest packing arrangement when using a fly's-eye lens shape.

In the present embodiment, the form of the opening portions 14PS formed in the light shielding layer 14 corresponds to the form caused by the light passing through the lens 11 and entering the surface of the lens sheet 13 (the surface on which the lens is formed) at a degree of beam collimation α. This form of the opening portions 14PS may be large in opening width, as compared to the form of the opening portions formed by laser light in the direction perpendicular to the lens sheet. Further, the ratio of the area occupied by the light shielding pattern 14P to the whole area of the sheet may be kept high.

Therefore, when an optical sheet having the light shielding pattern 14P formed on the back surface of the lens sheet 13 is used in a transmissive screen for rear projection image display device (rear projection television), high transmittance for image light and low transmittance and reflectance for ambient light may be achieved, thus obtaining higher contrast of image than a contrast of the related art.

In addition, in the present embodiment, the opening portions 14PS are formed by selectively removing only the positions of the light shielding layer 14 corresponding to the light-condensed regions by the lens utilizing the condensing action of each lens unit for the laser light to the lens sheet 13, that is, the opening portions 14PS may be formed by a self-aligning and physical method, thus making it possible to form a uniform opening pattern having a fine size in the light shielding layer 14 with accuracy.

Further, a desired light shielding pattern 14P may be formed without using a photosensitive adhesive layer which has been used in the past, and therefore, not only can the production cost be reduced, but also a uniform fine opening pattern may be formed constantly with accuracy in a large area. Particularly, the light shielding layer 14 is directly formed on the back surface of the lens sheet 13, and hence the light shielding pattern 14P may be formed with accuracy even for a lens sheet having a lens pitch of 200 µm or less.

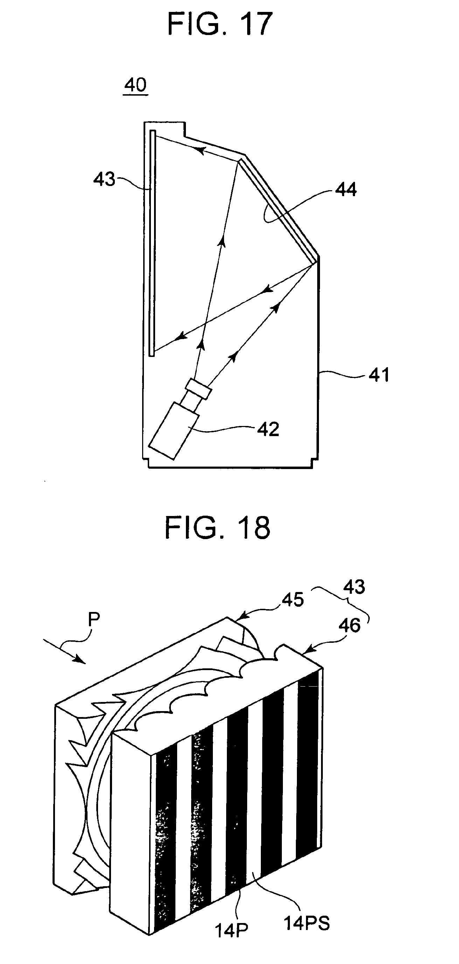

Figs. 17 to 20 show examples in which the lens sheet 13 having, for example, the above-described construction is used in a transmissive screen for rear projection image display device.

As shown in Fig. 17, a rear projection image display device 40 includes, in a main body 41, an image projection source 42, and a reflector 44 for reflecting image light emitted from the image projection source 42 toward a screen unit 43 at the front of the main body 41. The screen unit 43 is, as shown in Fig. 18, formed with a Fresnel lens screen 45 and a lenticular lens screen 46. The lenticular lens screen 46 corresponds to the transmissive screen in the present invention.

In the screen unit 43, the Fresnel lens screen 45 changes the image light (indicated by an arrow P) reflected by the reflector 44 into parallel rays of light toward the lenticular lens screen 46. The lenticular lens screen 46 has a lenticular lens array 11 at a predetermined pitch formed on one side facing the Fresnel lens screen 45, and has on the other side a light shielding pattern 14P having opening portions 14PS corresponding to the lens pitch. The use of the Fresnel lens screen 45 is not limited to the use as a refraction-type Fresnel lens screen shown in the figure, and it may be used as a total internal reflection-type Fresnel lens screen having a structure surface in the opposite direction.

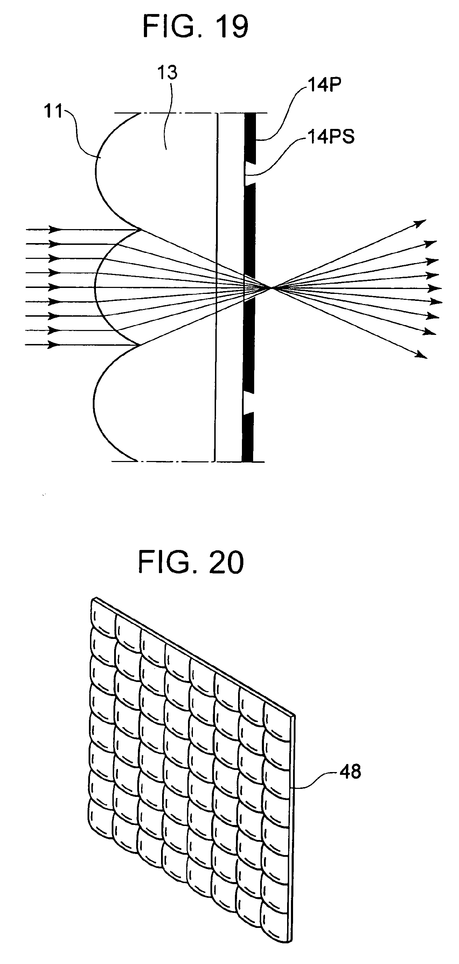

In this example, the lenticular lens array 11 is formed with a cylindrical lens, and the opening portions 14PS of the light shielding pattern 14P are in a striped form. The lenticular lens array may be formed with a fly's-eye lens screen 48 shown in Fig. 20, and, in this case, the opening portions of the light shielding pattern are in a dotted form according to the light-condensed portions by individual lens elements.

In the lenticular lens screen 46, each lens unit of the lenticular lens array 11 condenses the image light passing through the Fresnel lens screen 45 as shown in Fig. 19, and diffuses the light from the opening portions 14PS of the light shielding pattern on the other side, thus forming an image over the whole region of the front of the screen.

As mentioned above, in the present embodiment, the form of the opening portions 14PS in the light shielding pattern is a trapezoid corresponding to the form caused by the image light passing through the lens 11 on the surface of the lens sheet 13 (the surface on which the lens is formed) as shown in Fig. 19, that is, the opening size of the opening portions 14PS on the emission side may be smaller than the opening size on the incident side (the lens sheet 13 side). Further, the ratio of the area occupied by the light shielding pattern 14P to the whole area of the sheet may be increased. By virtue of this, high transmittance for image light and low transmittance and reflectance for ambient light may be achieved, thus obtaining higher contrast of image than a contrast of the related art.

### Examples

Herein below, the present invention will be described with reference to the following Examples, which should not be construed as limiting the scope of the present invention.

### Example 1

A polycarbonate substrate was processed into a non-spherical fly's-eye lens having a long axis pitch of 100 µm and a short axis pitch of 60 µm by a mask imaging method using a KrF excimer laser having a wavelength of 248 nm, and the resultant substrate as a master was subjected to Ni electroless plating for surface conduction treatment, followed by nickel-electroforming, to prepare a mold.

In the prepared mold was placed an urethane acrylic ultraviolet curing resin (ARONIX, manufactured and sold by Toa-gosei Co., Ltd.), and a polyethylene terephthalate film having a thickness of 50 µm (A4300, manufactured and sold by TOYOBO LTD.) was put on the resin and a pressure of 1 kg was applied to the film by means of a rubber roller so that the resultant lens had a uniform thickness and the excess resin was removed. Then, the polyethylene terephthalate film was irradiated with ultraviolet radiation at 1,000 mJ/cm² to cure the ultraviolet curing resin, obtaining a fly's-eye lens sheet.

A resin layer containing carbon black as a light shielding layer was applied to the back surface of the lens sheet. In forming the material for the light shielding layer, the raw materials shown below were mixed together and dispersed by means of a ball mill for an arbitrary period of time, and then passed through a filter having a pore diameter of 5 µm to prepare a composition.

### (Raw materials of light shielding layer)

Carbon black: 130 Parts by weight of RAVEN-1255, manufactured and sold by Columbia Carbon Corporation
Binder resin: 70 Parts by weight of polyester polyurethane (UR-8300, manufactured and sold by TOYOBO LTD.)
Solvent: 500 Parts by weight of methyl ethyl ketone
   500 Parts by weight of toluene

The composition prepared was applied and dried so that the resultant dried film had a thickness of 1.0 µm, followed by heat treatment at 60°C, to form a uniform light shielding layer.

The lens side of the thus prepared lens sheet having a light shielding layer thereon was irradiated with a fundamental wave of Nd-YAG laser (wavelength: 1,064 nm) under conditions such that the frequency was 5 kHz, the pulse width was 30 ns, the pulse interval was 0.2 ms, the pulse energy density was 140 mJ/cm², and the degree of beam collimation was ±2.5° to form opening portions in positions of the light shielding layer corresponding to the light-condensed regions. In adjusting the degree of beam collimation of the laser light, a light shaping diffuser film "LSD5 (trade name)", manufactured and sold by POC (Physical Optics Corporation), was used.

### Example 2

Opening portions were formed in positions of the light-shielding layer corresponding to the light-condensed regions under the same conditions as those in Example 1 except that a light shaping diffuser film "LSD10 (trade name)", manufactured and sold by POC (Physical Optics Corporation) was used, the degree of beam collimation of the laser light to the lens sheet was ±5°, and the pulse energy density was 200 mJ/cm².

### Example 3

An angle adjusting element having fine structure of 50 µm pitch tetragon with a shape shown in Fig. 13B was fabricated on a polycarbonate substrate by using the mask imaging method with KrF excimer laser of 248 nm wavelength. The angle adjusting element is formed to have such a slant angle of the linear portion that the angle distribution of ±7° was obtained for laser radiation that had passed the present angle adjusting element. It should be noted that, in practice, such angle distribution has rotational symmetry and produces a ring-shape intensity distribution. By using such polycarbonate angle adjusting element, opening portions were formed in positions of the light-shielding layer corresponding to the light-condensed regions under the same conditions as those in Example 1 except that the degree of beam collimation of the laser light to the lens sheet was ±7°, and the pulse energy density was 100 mJ/cm².

### Example 4

By using the angle adjusting element fabricated by the excimer laser, opening portions were formed in positions of the light-shielding layer corresponding to the light-condensed regions under the same conditions as those in Example 1 except that the degree of beam collimation of the laser light to the lens sheet was ±10°, and the pulse energy density was 140 mJ/cm².

### Comparative Example 1

Opening portions were formed in positions of the light-shielding layer corresponding to the light-condensed regions under the same conditions as those in Example 1 except that the degree of beam collimation of the laser light to the lens sheet was ±0.1°, and the pulse energy density was 80 mJ/cm².

### Comparative Example 2

Opening portions were formed in positions of the light-shielding layer corresponding to the light-condensed regions under the same conditions as those in Example 1 except that the degree of beam collimation of the laser light to the lens sheet was ±1.5° by using a convex lens, and the pulse energy density was 100 mJ/cm².

### Comparative Example 3

By using the angle adjusting element fabricated by the excimer laser, opening portions were formed in positions of the light-shielding layer corresponding to the light-condensed regions under the same conditions as those in Example 1 except that the degree of beam collimation of the laser light to the lens sheet was ±15°, and the pulse energy density was 200 mJ/cm².

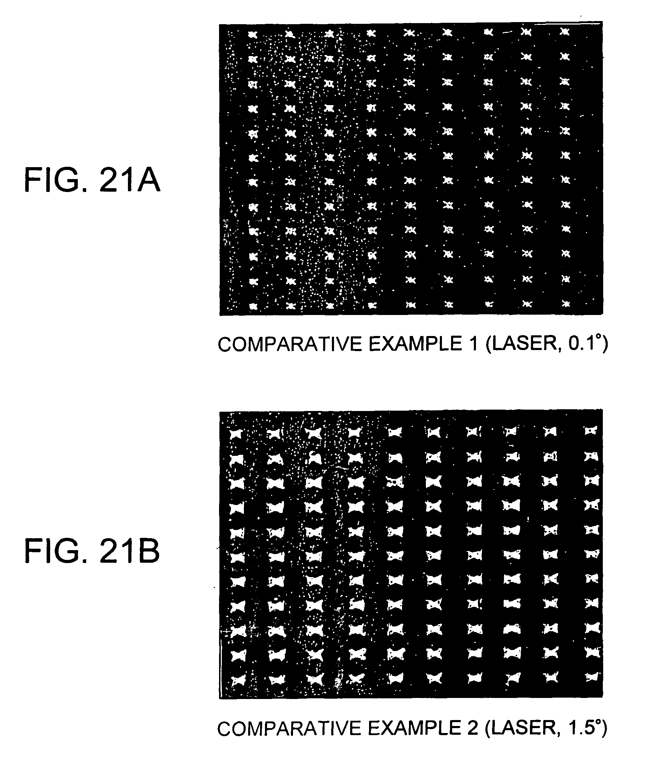

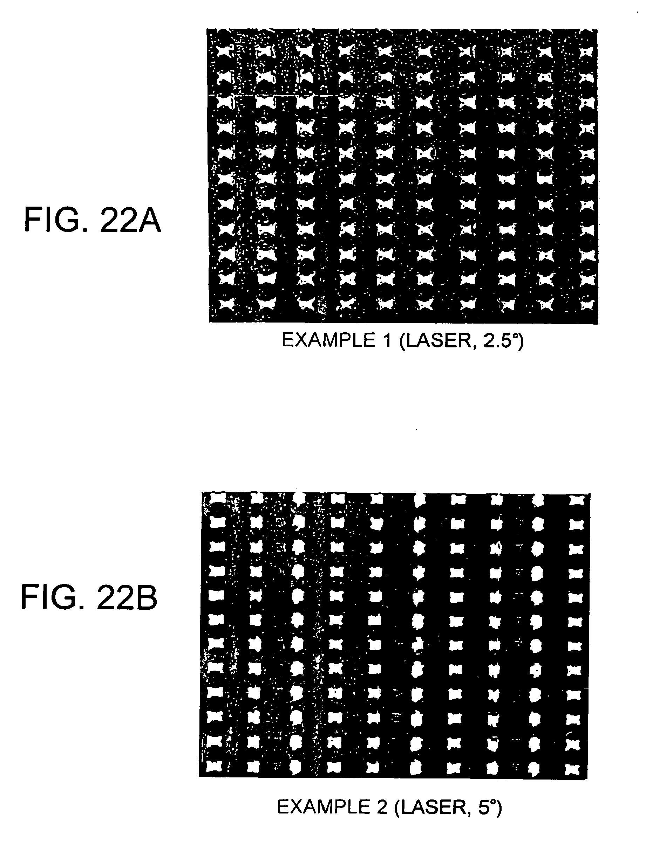

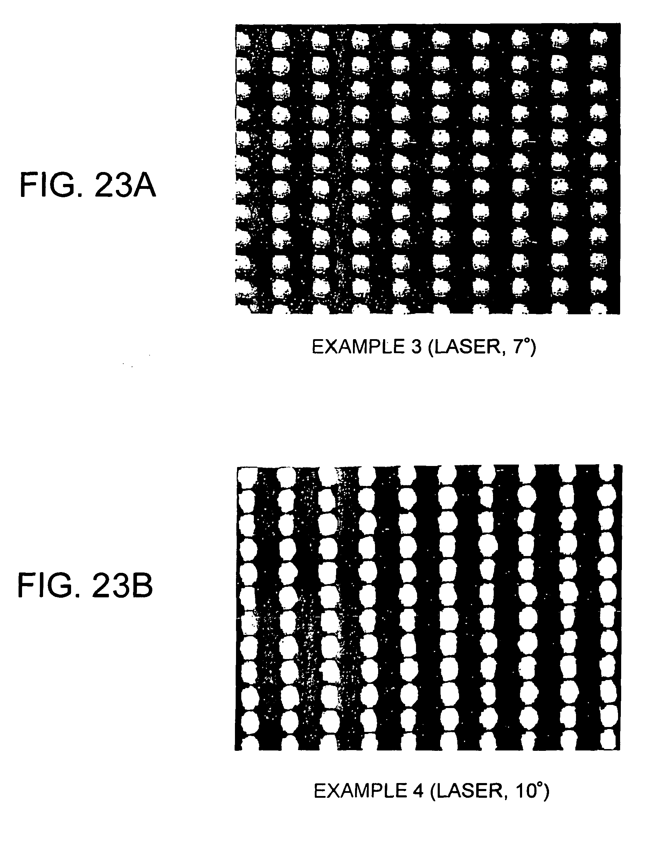

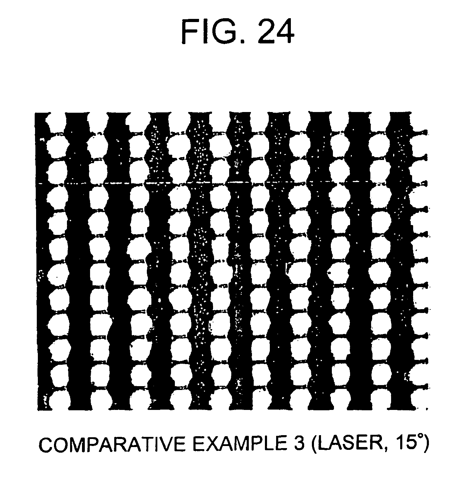

With respect to each of the samples in Examples 1 to 4 and Comparative Examples 1 to 3, a straight light transmittance, an actual light source transmittance, and a ratio of the area occupied by the light shielding layer (black ratio) were evaluated. The results are shown in Table 1. Photomicrographs of the light shielding patterns in Comparative Examples 1 and 2 are respectively shown in Figs. 21A and 21B, and photomicrographs of the light shielding patterns in Examples 1 to 4 are respectively shown in Figs. 22A, 22B and Figs. 23A, 23B. A photomicrograph of the light shielding patterns in Comparative Example 3 is shown in Fig. 24.

**TABLE 1**

| | Viewing angle of process light source (deg.) | Straight light transmittance (%) | Actual light source transmittance (%) | Black ratio (%) |
|---|---|---|---|---|
| Comparative Example 1 | ±0,1 | 69.9 | 41.6 | 95 |
| Comparative Example 2 | ±1.5 | 82.6 | 57.6 | 90 |
| Example 1 | ±2.5 | 85.2 | 63.2 | 87 |
| Example 2 | ±5 | 86.9 | 70.1 | 83 |
| Example 3 | ±7 | 88.7 | 73.8 | 77 |
| Example 4 | ±10 | 89.1 | 75.6 | 71 |
| Comparative Example 3 | ±15 | 89.2 | 76.0 | 57 |

In Table 1, the "Straight light transmittance" means a transmittance of light of the light source in the direction perpendicular to the lens sheet, and the "Actual light source transmittance" means a transmittance as measured by putting a Fresnel lens sheet containing a diffuser agent on the lens sheet. As the evaluation device, Haze Meter HM-150, manufactured by Murakami Color Research Laboratory, was used. The evaluation condition is in conformity with JIS K-7362. An about 10.5% loss of the transmittance due to surface reflection or backscattering by insertion of the Fresnel lens sheet containing a diffuser agent has been confirmed.

As the measuring method of the ratio of the area occupied by the light shielding layer (black ratio), the following steps were performed. First, an area of 1 cm squire at an arbitrary location on each light-shielding layer of the samples was cut out. Next, the surface of the cutout light-shielding layer was photographed by an optical microscope. Finally, the ratio of the area of the light-shielding layer was measured by using an image analyzing software.

As apparent from the results shown in Table 1, the larger the degree of beam collimation of the laser light to the lens sheet (i.e., the poorer the degree-of-collimation of the laser light), the larger the size of the opening portions formed, or the higher the transmittance of the sheet, namely, the lower the black ratio. In practice, when the lens sheet is used in a transmissive screen for projection image display device, for obtaining excellent luminance properties, it is preferred that the transmittance of the lens sheet (actual light source transmittance) is 60% or more. For maintaining excellent contrast properties of the projected image, it is preferred that the black ratio is 70% or more.

Accordingly, it is apparent that, for meeting properties such that the actual light source transmittance is 60% or more and the black ratio is 70% or more, the degree of beam collimation of the laser light to the lens sheet is ±2.5 to ±10°. The lens sheets produced in Examples 1 and 2 were individually actually put on a diffuser panel having beads with different refractive indexes dispersed in a matrix and used in a rear projection television. As a result, deep images having not only deep black but also sharp colors of green, red, and others were observed.

The present invention contains subject matter related to Japanese Patent Applications JP 2005-204235 and JP 2006-179073 filed in the Japanese Patent Office on July 13, 2005 and June 29, 2006, respectively, the entire contents of which being incorporated herein by reference.

It should be understood by those skilled in the art that various modifications, combinations, sub-combinations and alterations may occur depending on design requirements and other factors insofar as they are within the scope of the appended claims or the equivalents thereof.

## Claims

1. A method for producing a transmissive screen which includes a lens sheet (13) having a lens (11) formed on one side and a light shielding layer (14) formed on other side, the light shielding layer (14) having openings formed in regions at which light is condensed by the lens, the method comprising:
forming the light shielding layer (14) on the other side of the lens sheet (13); and
forming the openings in the regions at which light is condensed by the lens (12) by radiating laser light from the one side of the lens sheet (13);
wherein, in the forming of the openings, a degree of beam collimation of the laser light to the lens sheet (13) is adjusted after an energy density of the laser light is adjusted.

2. The method for producing a transmissive screen according to claim 1, wherein a beam profile of the laser light is adjusted during the adjustment of the energy density of the laser light.

3. The method for producing a transmissive screen according to claim 1 or 2, wherein the degree of beam collimation of the laser light is adjusted to ±2.5 to ±10°, both inclusive.

4. The method for producing a transmissive screen according to claim 1, 2 or 3, wherein:
the laser is a laser having a wavelength region such that the laser is not absorbed by the lens but is absorbed by the light-shielding layer.

5. The method for producing a transmissive screen according to claim 4, wherein:
the lens (12) is formed with an ultraviolet curing resin; and
the laser is a laser having a wavelength in a region from visible to near infrared.

6. The method for producing a transmissive screen according to one of the claims 1 to 5, wherein the laser is a pulsed laser.

7. Apparatus for producing a transmissive screen which includes a lens sheet having a lens formed on one side and a light shielding layer formed on the other side, the light shielding layer having openings formed in regions at which light is condensed by the lens, the apparatus comprising:
a laser source (21);
a mechanism adapted to adjust an energy density of laser light emitted from the laser source (21); and
a degree-of-collimation adjusting element (25) adapted to adjust a degree of beam collimation of the laser to be radiated to the lens sheet.

8. A transmissive screen which includes a lens sheet (13) having a lens (12) formed on one side and a light shielding layer (14) formed on the other side, the light shielding layer having openings formed in regions at which light is condensed by the lens (12), wherein:
the light-shielding layer (14) includes openings formed in positions corresponding to the regions at which light is condensed by the lens (12);
the opening are formed in the light shielding layer (14) by the laser light entering the lens at a degree of beam collimation ranging from ±2.5 to ±10°, both inclusive.
